# FASCICULE DE BREVET EUROPEEN

(11) **EP 0 551 417 B1**
(45) Date de publication et mention de la délivrance du brevet: **20.07.1994**
(21) Numéro de dépôt: 91919198.1
(22) Date de dépôt: 02.10.1991
(51) Int. Cl.: A23L 1/312

(54) **PROCEDE DE FABRICATION DE PRODUITS ALIMENTAIRES A BASE DE PANSE DE BOVINS, OU D'OVINS**
VERFAHREN ZUR HERSTELLUNG VON NAHRUNGSMITTELN AUF BASIS VON RINDERPANZE ODER SCHAFPANZE
METHOD FOR PRODUCING FOOD PRODUCTS BASED ON THE BELLIES OF ANIMALS OF OVINE AND BOVINE RACES

(30) Priorité: 02.10.1990 FR 9012459
(43) Date de publication de la demande: 21.07.1993
(73) Titulaire: SOCIETE LACHENAL, F-69320 Feyzin (FR)
(72) Inventeur: LACHENAL, Yves, F-69007 Lyon (FR)
(74) Mandataire: Perrier, Jean-Pierre
(86) Numéro de dépôt international: FR9100772
(87) Numéro de publication internationale: WO9205709

(56) Documents cités:
- FR-A- 1 023 478
- Patent Abstracts of Japan, vol. 6, n 68(C-100)(946) 30 April 1982
- Patent Abstracts of Japan, vol. 11, n 365 (C-460)(2812) 27 November 1987

## Description

La panse de bovins, c'est à dire de boeuf ou de veau, est actuellement utilisée pour réaliser des tripes cuisinées, des tripes en salade et du gras double, découpé ou moulé. Le caractère limitatif de cette liste résulte, d'une part, des formes diverses de la panse de bovins qui rendent difficiles sa préparation et en tout cas son découpage a des dimensions standard, et d'autre part, de sa couleur peu engageante, qui, blanche ou verdâtre après opération de blanchiement, nécessite, avec son goût fade, un assaisonnement et ou des préparations complémentaires. A cela s'ajoute la faible durée de conservation de ce produit alimentaire lorsqu'il n'est pas mis en conserve, à savoir trois à quatre jours en préparation courante à quelques mois en préparation cuisinée conservée au froid, et enfin la faible plus value qui se dégage de telles préparations, compte tenu d'un marché limité à des consommateurs avertis.

Pourtant la panse de bovins, ou d'ovins, fraîche c'est à dire non traitée pour la conserve, permet de réaliser des plats consommables, de qualité gustative supérieure à celle des préparations en conserve à base de panse.

JP-A-57 008 759 décrit un procédé de préparation d'aliments à base d'entrailles d'animaux domestiques, sous faibles conditions alcalines, consistant à congeler les aliments puis à les broyer. Cette technique n'est pas applicable à la préparation de triples.

La présente invention a pour but de remédier aux inconvénients des procédés connus en fournissant un procédé de fabrication de nouveaux produits alimentaires qui, à base de panse de bovins, ou d'ovins soient de forme, aspect, goût et poids réguliers et, en conséquence, adapté aux besoins de la distribution et de la restauration collective, soient de conservation beaucoup plus longue, et soient de présentation et cuisson plus proches des habitudes du consommateur que les produits actuels réalisés avec la même base.

Ce procédé, du type partant de panses de bovins et/ou d'ovins nettoyées, blanchies et dégraissées et cuites à l'eau consiste, ensuite et après égouttage, à hacher les panses en les faisant passer dans un broyeur dont la dimension des trous de la grille est comprise entre 6 et 20 mm, à assurer le mélange des fragments de panses avec un assaisonnement, et des additifs comprenant des conservateurs et des agents favorisant la liaison au moins à chaud desdits fragments, à mettre en forme le produit issu du mélange pour obtenir des tranches panées et à congeler chacune des tranches obtenues.

Un tel procédé permet d'obtenir des tranches d'épaisseur comprise entre 0,5 et 2 cm, formées par le mélange de fragments de panses de bovins avec leur assaisonnement et, éventuellement avec un complément pondéral tel que des protéines végétales ou protéines dites de poids. Les fragments restent liés les uns aux autres, aussi bien froid qu'à chaud, c'est à dire jusqu'à une température de cuisson courante, comprise entre 70 et 90°C. Pour sa consommation, la tranche obtenue est préparée par simple réchauffage au four ou par cuisson à la poële, avec ajout de matières grasses.

Dans une forme de mise en oeuvre de ce procédé, le hachage des panses est assuré à chaud, en sortie d'égouttage, tandis que le mélange est également effectué à chaud avec maintien à une température de l'ordre de 65° C et est suivi par une mise en forme comprenant, successivement et avant la congélation, l'introduction du mélange dans un boyau, naturel ou synthétique, une remontée en température à 82-85° C du produit obtenu, un refroidissement rapide entre 0 et 5° C de ce produit et enfin son tranchage avec élimination du fragment de boyau.

Une telle préparation à chaud convient bien à la panse de bovins qui, malgré son dégraissage, reste un produit relativement collant se mélangeant mieux à chaud, mais se sectionnant plus facilement à froid, c'est à dire entre 0 et 5°C.

Dans une autre forme de mise en oeuvre, l'opération de hachage est effectuée à froid après une opération de refroidissement des panses pour ramener leur température entre 0 et 5°C, tandis que l'opération de mélange, suivant le hachage, est également effectuée à froid, au même titre que l'opération de mise en forme qui lui succède.

Ce procédé de fabrication à froid est plus délicat à mettre en oeuvre que le précédent mais présente l'avantage d'éviter tous risques de développement bactérien dans le produit alimentaire.

Avantageusement, dans le procédé de fabrication à froid, I'opération de mise en forme consiste à comprimer des fractions du mélange obtenu pour former des galettes.

Ainsi, après congélation, le produit alimentaire a le même type de présentation que les tranches obtenues à chaud et les fragments qui le constituent ont la même cohésion.

Selon les qualités gustatives recherchées, les agents de liaison des fragments du mélange, sont ajoutés à ce mélange dans une proportion qui, hors complément pondéral, est comprise entre 2 et 7 % en poids du mélange final.

Il va maintenant être procédé, à titre d'exemple non limitatif, à la description détaillée complète du procédé de préparation à chaud et du procédé de préparation à froid.

Les deux procédés partent de panses de boeufs, de veaux ou d'un mélange des deux, dégraissées, blanchies et nettoyées par cuisson à l'eau en marmite pendant sensiblement 12 heures à une température régulée entre 82 et 84° C. En sortie de cette cuisson, les panses sont égouttées pendant une durée comprise entre 10 et 15 minutes.

Dans le procédé de fabrication à chaud, les panses sont immédiatement hachées au moyen d'un broyeur dont la trémie conduit les panses en direction d'une vis de transport les forçant à travers une grille perforée. Les perforations de cette grille ont des mailles circulaires ou carrées, dont la dimension transversale est comprise entre 6 et 20 millimètres en fonction du moelleux que l'on veut donner au produit alimentaire final. En pratique, les mailles ont des dimensions comprises entre 10 et 20 millimètres.

Après hachage, les fragments de panses encore tièdes sont déversés dans un mélangeur composé d'une cuve pouvant être obturée par un couvercle et raccordée à une source de vide. Dans cette cuve, les fragments de panses sont mélangés avec leur assaisonnement composé de vin blanc, moutarde, persil, sel, poivre et de divers autres condiments en fonction du goût final et dans des proportions que l'Homme de l'Art est en mesure de trouver aisément. Les fragments sont également mélangés avec des additifs comprenant des conservateurs, du sel nitraté, des anti-oxygènes et des agents de liaison assurant leur cohésion à froid et à chaud.

Ils peuvent aussi être mélangés avec un complément pondéral, tel que des protéines végétales ou des protéines dites de poids, ajouté dans une proportion comprise entre 10 et 25 % du poids de mélange total.

La proportion d'agents de liaison, hors complément pondéral et par rapport au poids total de mélange final, est comprise entre 2 et 7 %. Elle comprend au minimum, de l'ordre de 2 % d'agent de liaison à chaud, de l'ordre de 0,15 % de sel nitrité, 0,1 % d'anti oxygène. L'agent de liaison à chaud est choisi parmi les produits suivants: blanc d'oeufs en poudre, séroprotéines.

Lorsque le mélange est suffisamment homogène, c'est à dire lorsque les différents composants sont parfaitement liés entre eux, ce que l'Homme de l'Art sait reconnaître à l'oeil, ce mélange est déversé dans une boudineuse aussi dénommée "poussoir", assurant la première phase de l'opération de mise en forme du produit alimentaire en l'embossant dans un boyau, naturel ou synthétique, permettant d'obtenir un produit final cylindrique ayant un diamètre de l'ordre de 2 à 14 cm.

Dans une phase suivante, le produit alimentaire ainsi mis en forme est remonté en température à 82 à 84° C, par exemple par cuisson à l'eau dans une marmite, et ceci afin d'éliminer les bactéries qui auraient pu se développer depuis l'égouttage.

Après cuisson pendant une durée de 15 minutes, le produit est soumis à un refroidissement, par exemple par trempage dans un bac contenant de l'eau froide, afin que sa température soit ramenée entre 0 et 5°C. Les boudins cylindriques ainsi obtenus sont ensuite découpés pour former des tranches sensiblement cylindriques ayant une épaisseur comprise entre 0,5 et 2 cm et, plus généralement, de l'ordre de 1,5 cm. Ces tranches, débarrassées du fragment de boyau, sont ensuite déposées sur un tapis transporteur qui les emmènent sous une paneuse, puis à un poste de congélation ou elles sont portées à une température de l'ordre de -30 à -35°C. Après passage, les tranches peuvent être dorées par passage dans un tunnel de dorage.

Dans le procédé de fabrication à froid, les panses dégraissées, blanchies et nettoyées, sont trempées dans un bac d'eau froide les ramenant à une température de 0 à + 5°C.

Après égouttage, les panses froides sont hachées par un broyeur de même caractéristique que celui décrit dans le cadre du procédé de fabrication à chaud. Après hachage, elles sont déversées dans un mélangeur sous vide avec leur assaisonnement et les additifs identiques à ceux décrits pour le procédé de fabrication à chaud. Toutefois, dans ce procédé de fabrication à froid, il est ajouté à l'agent de liaison à chaud un agent de liaison à froid. Lorsque ce dernier est du carboxy methyl cellulose, sa proportion, hors complément pondéral et par rapport au poids de mélange final, est comprise entre 0,5 et 2 %, tandis que celle de l'agent de liaison à chaud est comprise entre 2 et 5 %.

Pour maintenir le mélange à une température comprise entre 0 et 5° C pendant son malaxage, le mélangeur est associé à des moyens de refroidissement par gaz, notamment par l'injection de gaz carbonique gazeux ou d'azote dans l'enceinte fermée du mélangeur. Lorsque le mélange est homogène, il est procédé à l'opération de mise en forme qui, dans ce procédé, consiste à prélever une part du mélange pour la former sous pression dans une empreinte correspondante à une portion.

L'homme de l'Art connaît de nombreuses machines ou appareils pouvant réaliser cette opération et, à titre d'exemple, on peut citer les appareils de formage comportant une trémie conduisant le mélange entre deux cylindres parallèles tournant en sens inverse et en avalant le produit, cylindres dont au moins l'un comporte des empreintes dans lesquelles les fractions de mélange sont pressées par l'autre cylindre.

Les galettes ainsi obtenues sont déposées sur un tapis transporteur qui les conduit sous une paneuse, puis éventuellement dans un tunnel de dorage, et, enfin, à un poste de congélation où elles sont portées à une température comprise entre -30 et -35° C avant d'être stockées et, éventuellement, conditionnées.

Il faut ici noter que, le conditionnement peut être effectué avant ou après la congélation, sans que cela modifie les qualités du produit.

Les portions, se présentant sous forme de tranches ou sous forme de galettes, peuvent être conditionnées directement dans des emballages en carton, ou suremballées dans de tels emballages après pré-conditionnement sous emballage en matière synthétique, avec ou sans inclusion de vide, de gaz neutre ou de mélange de gaz conservateurs.

Le produit obtenu par l'un ou l'autre des procédés a un durée de conservation bien supérieure à celle des produits actuels à base de panses, durée qui s'apparente à celle des produits congelés ou surgelés.

Il peut aussi être conservé comme un produit frais, cas dans lequel sa durée de conservation est la même que celle de tels produits frais.

Chaque portion a des formes, dimensions et aspects réguliers, c'est à dire est homogène d'une portion à une autre, ce qui facilite son conditionnement et sa présentation, mais aussi son utilisation ultérieure, et garantit la régularité des quantités fournies.

Chaque tranche ou galette est composée de fragments de panses enclavés dans un assaisonnement et entouré de panure. L'aspect de ce nouveau produit est donc voisin des produits que les consommateurs ont l'habitude de voir à l'étalage et a donc un caractère beaucoup plus engageant que les tripes tradionnelles.

Pour consommer ce nouveau produit, il suffit, soit de le décongeler et de le réchauffer par passage dans un four, traditionnel ou à micro-ondes, soit de le passer à la poële avec un apport de matière grasse, pour le réchauffer et, éventuellement, le frire en surface. Ses qualités gustatives dépendent de l'assaisonnement utilisé, adapté lui-même aux coutumes locales.

De par sa composition à base de panses de bovins ou d'ovins hachées, il possède sous la dent un moelleux qui, plus ou moins important en fonction de la dimension de ses fragments, semble être optimal pour la moyenne des consommateurs lorsque les trous des grilles de broyeur ont une dimension comprise entre 10 et 12 millimètres.

## Revendications

1. Procédé de fabrication de produits alimentaires à base de panses de bovins et/ou d'ovins, du type partant de panses nettoyées, blanchies, dégraissées et cuites à l'eau, caractérisé en ce qu'il consiste, ensuite et après égouttage, à hacher les panses en les faisant passer dans un broyeur dont la dimension des trous de la grille est comprise entre 6 et 20 millimètres, à assurer le mélange des fragments de panses obtenu avec un assaisonnement et des additifs comprenant des conservateurs et des agents favorisant au moins la liaison à chaud desdits fragments, à mettre en forme le produit issu du mélange pour obtenir des tranches panées, et à congeler chacune des tranches obtenues.

2. Procédé selon la revendication 1, caractérisé en ce que le hachage des panses est assuré à chaud, en sortie d'égouttage, tandis que le mélange est également effectué à chaud avec maintien à une température de l'ordre de 65° C et est suivi par une mise en forme comprenant, successivement et avant la congélation, l'introduction du mélange dans un boyau, naturel ou synthétique, une remontée en température à 82-85° C du produit obtenu, un refroidissement rapide entre 0 et 5° C de ce produit, et enfin un tranchage suivi du panage.

3. Procédé selon la revendication 1, caractérisé en ce que l'opération de hachage est effectuée à froid après une opération de refroidissement des panses pour amener leur température entre 0 et 5° C, tandis que l'opération de mélange suivant le hachage est également effectuée à froid entre 0 et 5° C, au même titre que les opérations de mise en forme et de panage qui lui succèdent.

4. Procédé selon la revendication 3, caractérisé en ce que l'opération de mise en forme consiste à comprimer des portions de mélange dans des empreintes formant des galettes.

5. Procédé selon l'une quelconque des revendications 1 à 4, caractérisé en ce que les agents de liaison sont ajoutés au mélange dans une proportion qui, hors complément pondéral, est comprise entre 2 et 7 % du poids de mélange final.

6. Procédé selon l'ensemble des revendications 1, 2 et 5, caractérisé en ce que la proportion, hors agent pondéral, de liant à chaud, par rapport au poids total de mélange, est comprise entre 2 et 5 %.

7. Procédé selon l'ensemble des revendications 1 et 3 à 6, caractérisé en ce que la proportion, hors agent pondéral, de liant à froid, par rapport au poids total de mélange, est comprise entre 0,5 et 2 %.

## Patentansprüche

1. Verfahren zur Herstellung von Nahrungsmitteln auf Grundlage von Rinder- und/oder Schafspansen in einer Form, ausgehend von gereinigten, gebleichten, entfetteten und in Wasser gekochten Pansen, dadurch gekennzeichnet, daß es darin besteht, im Anschluß und nach dem Abtropfenlassen die Pansen zu zerhacken, indem sie durch eine Zerkleinerungsvorrichtung geschickt werden, wobei die Größe der Löcher des Gitters zwischen 6 bis 20 Millimeter ist, das Mischen der erhaltenen Pansenstücke mit Gewürz und Zusätzen, umfassend Konservierungsstoffe und Stoffe, die mindestens im Warmen den Zusammenhalt der Stücke fördern, Sicherzustellen, Formen des aus dem Gemisch hervorgegangenen Erzeugnisses , um panierte Scheiben zu erhalten, und jede der erhaltenen Scheiben einzufrieren.

2. Verfahren nach Anspruch 1, dadurch gekennzeichnet, daß das Zerhacken der Pansen im Warmen ausgeführt wird, nach dem Abtropfenlassen, während das Mischen ebenfalls im Warmen mit Beibehalten einer Temperatur im Bereich von 65°C durchgeführt wird, gefolgt von einer Formgebung, die nacheinander und vor dem Einfrieren, das Einbringen des Gemischs in einen natürlichen oder künstlichen Darm, ein erneutes Bringen des erhaltenen Erzeugnisses auf eine Temperatur von 82 bis 85°C, ein schnelles Abkühlen dieses Erzeugnisses auf zwischen 0 und 5°C, und schließlich ein Zerschneiden, gefolgt von Panieren, umfaßt.

3. Verfahren nach Anspruch 1, dadurch gekennzeichnet, daß der Schritt des Zerhackens nach dem Schritt des Abkühlens der Pansen, um ihre Temperatur auf zwischen 0 und 5°C zu bringen, im Kalten durchgeführt wird, während der folgende Schritt des Mischens des Zerhackten ebenfalls im Kalten zwischen 0 und 5°C durchgeführt wird, sowie ebenfalls die Schritte der Formgebung und des Panierens, die ihm folgen.

4. Verfahren nach Anspruch 3, dadurch gekennzeichnet, daß der Schritt der Formgebung darin besteht, Teile des Gemischs zur Formung von Fladen in Prägeformen zu verpressen.

5. Verfahren nach einem der Ansprüche 1 bis 4, dadurch gekennzeichnet, daß die Bindemittel dem Gemisch, außer zur Gewichtsergänzung, in einem Anteil, der 2 bis 7% des Gewichts des endgültigen Gemischs umfaßt, zugefügt werden.

6. Verfahren nach den Ansprüchen 1, 2 und 5, dadurch gekennzeichnet, daß der Anteil des Warmbindemittels, außer als Gewichtsstoff, in Beziehung auf das Gesamtgewicht der Mischung, zwischen 2 und 5% umfaßt.

7. Verfahren nach den Ansprüchen 1 und 3 bis 6, dadurch gekennzeichnet, daß der Anteil des Kaltbindemittels, außer als Gewichtsstoff, in Beziehung auf das Gesamtgewicht der Mischung, zwischen 0.5 und 2% umfaßt.

## Claims

1. A method of producing food products based on the bellies of ovine and/or bovine animals, of the type starting from cleaned, blanched, defatted and water-cooked bellies, characterised in that, following this and after draining, it consists in chopping the bellies and passing them into a grinder, the grill of which has holes of a dimension comprised between 6 and 20 millimetres, to ensure the mixing of the belly fragments obtained with a seasoning and with additives including preservatives and agents for promoting at least the binding of the fragments when heated, in shaping the product of the mixture to produce breadcrumb coated slices and in freezing each of the slices produced.

2. A method according to Claim 1, characterised in that the chopping of the bellies is effected while they are hot, after draining, whilst the mixing is also done when hot with a temperature maintained in the order of 65°C and is followed by shaping including, successively and before freezing, the introduction of the mixture into a natural or synthetic casing, a raising of the temperature of the product produced to 82 - 85°C, rapid cooling to between 0° and 5°C of this product, and finally slicing followed by coating with breadcrumbs.

3. A method according to Claim 1, characterised in that the chopping operation is carried out cold after an operation to cool the bellies to bring their temperature to between 0° and 5°C, whilst the mixing operation following the chopping is also carried out cold at between 0° and 5°C, for the same reason as the shaping and coating operations which follow it.

4. A method according to Claim 3, characterised in that the shaping operation consists in compressing portions of the mixture into moulds forming flat cakes.

5. A method according to any one of Claims 1 to 4, characterised in that the binding agents are added to the mixture in a proportion which, apart from gravimetric complement, is comprised between 2 and 7% of the weight of the final mixture.

6. A method according to the combination of Claims 1, 2 and 5, characterised in that the proportion, apart from gravimetric agent, of hot binder, with respect to the total weight of the mixture, is comprised between 2 and 5%.

7. A method according to the combination of Claims 1 and 3 to 6, characterised in that the proportion, apart from gravimetric agent, of cold binder, with respect to the total weight of the mixture, is comprised between 0.5 and 2%.
